(19) Europäisches Patentamt
European Patent Office
Office européen des brevets

(11) Veröffentlichungsnummer: **0 321 407 B1**

# (12) EUROPÄISCHE PATENTSCHRIFT

(45) Veröffentlichungstag der Patentschrift: **22.06.94**

(51) Int. Cl.[5]: **C08L 63/00**, C08L 67/00, C08G 59/68

(21) Anmeldenummer: **88810851.1**

(22) Anmeldetag: **09.12.88**

Die Akte enthält technische Angaben, die nach dem Eingang der Anmeldung eingereicht wurden und die nicht in dieser Patentschrift enthalten sind.

## (54) Flexibilisierte Epoxidharzzusammensetzungen.

(30) Priorität: **18.12.87 CH 4957/87**

(43) Veröffentlichungstag der Anmeldung:
**21.06.89 Patentblatt 89/25**

(45) Bekanntmachung des Hinweises auf die Patenterteilung:
**22.06.94 Patentblatt 94/25**

(84) Benannte Vertragsstaaten:
**BE CH DE FR GB IT LI NL SE**

(56) Entgegenhaltungen:
**EP-A- 0 109 851**
**EP-A- 0 153 904**
**EP-A- 0 182 744**
**AT-B- 384 025**
**GB-B- 739 701**

**R. Houwink, G. Salomon (Hrsg.), "Adhesion and Adhesives", Bd. 1, 1965, Elsevier Publishing Company, Amsterdam-London-New York, S. 259-261**

(73) Patentinhaber: **CIBA-GEIGY AG**
**Klybeckstrasse 141**
**CH-4002 Basel(CH)**

(72) Erfinder: **Manser, Aloysius Hubertus**
**Feldstrasse 93**
**CH-4123 Allschwil(CH)**
Erfinder: **Strasilla, Dieter, Dr.**
**Efringerstrasse 26**
**D-7858 Weil am Rhein(DE)**
Erfinder: **Mülhaupt, Rolf, Dr.**
**Chemin de la Prairie 2**
**CH-1723 Marly(CH)**

**EP 0 321 407 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Epoxidharzzusammensetzungen, die gehärteten Produkte und die Verwendung der Epoxidharzzusammensetzungen als Klebstoffe oder als Beschichtungsmittel.

Gehärtete Epoxidharze sind im allgemeinen spröde Materialien, die geringe Schälfestigkeiten und Schlagzähigkeiten aufweisen. Um dieser Versprödung entgegenzuwirken, setzt man dem Epoxidharz Flexibilisatoren zu. Beispiele dafür sind elastische Präpolymere, wie Addukte von Epoxidharzen an carboxyl- oder amino-terminierte Butadien/Acrylnitril Copolymere oder carboxyl-terminierte Polyester. Diese Zusätze können zu einer Verschlechterung anderer wünschenswerter Eigenschaften führen, beispielsweise zur Herabsetzung der Zugscherfestigkeit der gehärteten Formulierung. Gemische aus Epoxidharzen und Metallocenkomplexsalzen sind aus der EP-A-94,915 bekannt. Die Gemische können durch Bestrahlung aktiviert werden und in einem thermischen Schritt ausgehärtet werden. Es wurden jetzt Kombinationen von Epoxidharzen, ausgewählten Eisen-Aren-Komplexsalzen und ausgewählten Flexibilisatoren gefunden, aus denen sich Einkomponentenklebstoffe herstellen lassen. Die gehärteten Klebverbindungen aus diesen Gemischen zeichnen sich durch hohe Zugscherfestigkeit und hohe Rollenschälfestigkeit (roller-peel) aus. Ausgewählte Einkomponentenkleber lassen sich bereits bei 80 - 100 °C oder tiefer aushärten und beispielsweise als Strukturkleber einsetzen.

Die vorliegende Erfindung betrifft Zusammensetzungen enthaltend

A) ein Epoxidharz mit durchschnittlich mindestens zwei 1,2-Epoxidgruppen pro Molekül oder ein Gemisch dieser Epoxidharze,

B) eine Verbindung der Formel I oder ein Gemisch dieser Verbindungen

$$\left[ R^1(Fe^{II}R^2)_a \right]^{ab\oplus} \quad ab\cdot[X]^{\ominus} \qquad (I) ,$$

worin a und b unabhängig voneinander 1 oder 2 sind, $R^1$ ein $\pi$-Aren ist, $R^1$ ein $\pi$-Aren, ein Indenylanion oder ein Cyclopentadienylanion bedeutet, $X^{\ominus}$ ein Anion $[LQ_m]^{\ominus}$ oder ein Anion einer teil- oder perfluorierten aliphatischen oder aromatischen Sulfonsäure ist, L B, P, As oder Sb bedeutet, Q Fluor ist oder ein Teil der Reste Q auch Hydroxylgruppen sein können und m der um Eins vergrösserten Wertigkeit von L entspricht, und

C) einen mit durchschnittlich mindestens zwei Carboxylgruppen terminierten flexiblen Polyester, der sich ableitet von einem aliphatischen oder cycloaliphatischen Polyol oder einem Gemisch solcher Polyole und einer aliphatischen, cycloaliphatischen oder aromatischen Polycarbonsäure oder einem Gemisch solcher Polycarbonsäuren.

Als Komponente A) eignen sich in der Regel alle Epoxidharze mit durchschnittlich mindestens zwei 1,2-Epoxidgruppen im Molekül. Zu diesen Verbindungen zählen beispielsweise:

I) Polyglycidyl- und Poly-($\beta$-methylglycidyl)-ester erhältlich durch Umsetzung einer Verbindung mit mindestens zwei Carboxylgruppen im Molekül und Epichlorhydrin bzw. Glycerindichlorhydrin bzw. $\beta$-Methylepichlorhydrin. Die Umsetzung erfolgt zweckmässig in der Gegenwart von Basen.

Als Verbindung mit mindestens zwei Carboxylgruppen im Molekül können aliphatische, cycloaliphatische oder aromatische Polycarbonsäuren verwendet werden. Beispiele für diese Polycarbonsäuren sind weiter unten als Bildungskomponenten des Polyesters C) aufgeführt.

II) Polyglycidyl- oder Poly-($\beta$-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis(4-hydroxycyclohexyl)-propan oder 1,1-Bis-(hydroxymethyl)-cyclohex-3-en.

Die Epoxidverbindungen können sich auch von einkernigen Phenolen ableiten, wie beispielsweise von Resorcin oder Hydrochinon; oder sie basieren auf mehrkernigen Phenolen wie beispielsweise auf

Bis-(4-hydroxyphenyl)-methan, 4,4′-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen wie Phenol, oder mit Phenolen, die im Kern mit Chloratomen oder $C_1$-$C_9$ Alkylgruppen substituiert sind, wie beispielsweise 4-Chlorphenol, 2-Methylphenol oder 4-tert.Butylphenol oder erhältlich durch Kondensation mit Bisphenolen, so wie oben beschrieben.

III) Poly-(S-glycidyl) Verbindungen, insbesondere Di-S-glycidylderivate, die sich von Dithiolen, wie beispielsweise Ethan-1,2-dithiol oder Bis-(4-merkaptomethylphenyl)-ether ableiten.

IV) Cycloaliphatische Epoxidharze, wie Bis-(2,3-epoxicyclopentyl)-ether, 2,3-Epoxicyclopentylglycidylether oder 1,2-Bis-(2,3-epoxycyclopentyloxy)-ethan oder 3,4-Epoxicyclohexylmethyl-3′,4′-epoxicyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise der Glycidylether-glycidylester der Salicylsäure.

Falls gewünscht, kann eine Mischung von Epoxidharzen in den erfindungsgemässen Gemischen verwendet werden.

Diese Epoxidharze sind an sich bekannt oder können nach bekannten Verfahren hergestellt werden.

Bei Komponente B) kommen als $\pi$-Arene $R^1$ und $R^2$ insbesondere carbocyclisch-aromatische Kohlenwasserstoffe mit 6 bis 24 Kohlenstoffatomen, insbesondere mit 6 bis 12 Kohlenstoffatomen, oder heterocyclisch-aromatische Kohlenwasserstoffe mit 4 bis 11 Kohlenstoffatomen und ein oder zwei S- und/oder O-Atomen in Betracht, wobei diese Gruppen gegebenenfalls durch gleiche oder verschiedene einwertige Reste, wie Halogenatome, vorzugsweise Chlor- oder Bromatome oder $C_1$-$C_8$-Alkyl, $C_1$-$C_8$-Alkoxy oder Phenyl einfach oder mehrfach, vorzugsweise ein- oder zweifach, substituiert sein können. Diese $\pi$-Arengruppen können einkernige, kondensierte mehrkernige oder unkondensierte mehrkernige Systeme darstellen, wobei in den zuletzt genannten Systemen die Kerne direkt oder über Brückenglieder, wie $-CH_2-$, $-C(CH_3)_2-$, -O-, -S-, $-SO_2-$, -CO- oder -CH = CH-, verknüpft sein können.

$R^2$ kann auch ein Indenylanion und insbesondere ein Cyclopentadienylanion sein, wobei auch diese Anionen gegebenenfalls durch gleiche oder verschiedene einwertige Reste, wie oben als Substituenten für $\pi$-Arene erwähnt, einfach oder mehrfach, vorzugsweise ein- oder zweifach substituiert sein können.

Die Alkyl- oder Alkoxysubstituenten können dabei geradkettig oder verzweigt sein. Als typische Alkyl- oder Alkoxysubstituenten seien Methyl, Ethyl, n-Propyl, Isopropyl, n-Butyl, sek.-Butyl, tert.-Butyl, n-Pentyl, n-Hexyl und n-Octyl, Methoxy, Ethoxy, n-Propoxy, Isopropoxy, n-Butoxy, n-Hexyloxy und n-Octyloxy genannt. Dabei sind Alkyl- und Alkoxygruppen mit 1 bis 4 und insbesondere 1 oder 2 Kohlenstoffatomen in den Alkylteilen bevorzugt. Als substituierte $\pi$-Arene oder substituierten Indenyl- oder Cyclopentadienylanionen werden solche bevorzugt, die einen oder zwei der obengenannten Substituenten, insbesondere Methyl-, Ethyl-, n-Propyl, Isopropyl, Methoxy-oder Ethoxygruppen, enthalten.

Als $R^1$ und $R^2$ können gleiche oder verschiedene $\pi$-Arene vorliegen.

Beispiele für geeignete $\pi$-Arene sind Benzol, Toluol, Xylole, Ethylbenzol, Cumol, Methoxybenzol, Ethoxybenzol, Dimethoxybenzol, p-Chlortoluol, m-Chlortoluol, Chlorbenzol, Brombenzol, Dichlorbenzol, Trimethylbenzol, Trimethoxybenzol, Naphthalin, 1,2-Dihydronaphthalin, 1,2,3,4-Tetrahydronaphthalin, Methylnaphthalin, Methoxynaphthalin, Ethoxynaphthalin, Chlornaphthalin, Bromnaphthalin, Biphenyl, Stilben, Inden, 4,4′-Dimethylbiphenyl, Fluoren, Phenanthren, Anthracen, 9,10-Dihydroanthracen, Triphenyl, Pyren, Perylen, Naphthacen, Coronen, Thiophen, Chromen, Xanthen, Thioxanthen, Benzofuran, Benzothiophen, Naphthothiophen, Thianthren, Diphenylenoxyd und Diphenylensulfid.

Beispiele für Anionen substituierter Cyclopentadiene sind die Anionen des Methyl-, Ethyl-, n-Propyl- und n-Butylcyclopentadiens oder die Anionen des Dimethylcyclopentadiens. Bevorzugte Anionen sind das Anion des unsubstituierten Indens und insbesondere des unsubstituierten Cyclopentadiens.

Der Index a ist vorzugsweise 1. Der Index b ist vorzugsweise 1. Wenn a 2 ist, stellt $R^2$ vorzugsweise je das gegebenenfalls substituierte Indenylanion oder insbesondere das Cyclopentadienylanion dar.

$X^{\ominus}$ ist bevorzugt das Anion einer perfluoraliphatischen oder perfluoraromatischen Sulfonsäure und ganz besonders $[LQ_m]^{\ominus}$, wie oben definiert.

Beispiele für Anionen perfluoraliphatischer oder perfluoraromatischer Sulfonsäuren sind $CF_3SO_3^{\ominus}$, $C_2F_5SO_3^{\ominus}$, n-$C_3F_7SO_3^{\ominus}$, n-$C_4F_9SO_3^{\ominus}$, n-$C_6F_{13}SO_3^{\ominus}$, n-$C_8F_{17}SO_3^{\ominus}$, $C_6F_5SO_3^{\ominus}$ und $CF_3C_6F_4SO_3^{\ominus}$.

Beispiele für besonders bevorzugte Anionen $[LQ_m]^{\ominus}$ sind $PF_6^{\ominus}$, $AsF_6^{\ominus}$, $SbF_6^{\ominus}$ und $SbF_5(OH)^{\ominus}$. Ganz besonders bevorzugt werden $AsF_6^{\ominus}$, $SbF_6^{\ominus}$ und $SbF_5(OH)^{\ominus}$ und insbesondere $SbF_6^{\ominus}$.

Härtbare Gemische enthaltend Initiatoren mit diesen ganz besonders bevorzugten Anionen lassen sich nach deren Aktivierung durch Bestrahlung bereits bei niedrigen Temperaturen aushärten.

Die Verbindungen der Formel I sind an sich bekannt oder können in Analogie zu bekannten Verbindungen hergestellt werden. Die Herstellung der Salze mit $X^- = [LQ_m]^-$ ist beispielsweise in der EP-A-94,915 beschrieben. Verbindungen der Formel I mit anderen Anionen lassen sich in Abweichung zu den dort beschriebenen Verfahren herstellen, indem man anstelle eines Anions einer komplexen Säure ein anderes Anion der Säure HX in an sich bekannter Weise einführt; dabei besitzt X die oben definierte Bedeutung.

Komponente C) kann bei Raumtemperatur fest oder flüssig sein. In der Regel handelt es sich um lineare Polyester oder um Verbindungen mit einem solchen Verzweigungs- oder Vernetzungsgrad, so dass diese sich in einem organischen Lösungsmittel ohne Gelrückstand auflösen lassen. Der Verzweigungs- oder Vernetzungsgrad kann in an sich bekannter Weise durch Funktionalität und Menge polyfunktioneller Kondensationskomponenten (Polyole oder Polycarbonsäuren) geregelt werden.

Die flexiblen Polyester C) können amorph oder teilkristallin sein und sind vorzugsweise mit der Harzkomponente A) verträglich oder leicht darin dispergierbar.

Der Erweichungspunkt der Polyester C) liegt vorzugsweise unterhalb von 100 °C.

Die Polyester C) besitzen in der Regel Molekulargewichte (Zahlenmittel) von 250 bis 15000, vorzugsweise von 500 bis 2500.

Ihre Säurezahl beträgt in der Regel 0,1 bis 5 Aequ./kg, vorzugsweise 0,25 bis 2,0 Aequ./kg.

Die Viskosität (nach Epprecht) dieser Polyester ist in der Regel kleiner als 2000 mPas (bei 80 °C).

Die carboxylterminierten flexiblen Polyester leiten sich von aliphatischen oder cycloaliphatischen Polyolen und aliphatischen, cycloaliphatischen oder aromatischen Polycarbonsäuren ab. Bevorzugtes Polyol ist Hexandiol, das gegebenenfalls mit Neopentylglykol oder Cyclohexandimethanol kombiniert wird, um die Hydrolysebeständigkeit zu erhöhen. Bevorzugte Polycarbonsäuren sind $\alpha,\omega$-Dicarbonsäuren mit aliphatischen Segmenten wie z.B. Adipin- oder Sebazinsäure.

Im Fall der Polyole setzt man bevorzugt niedermolekulare und präpolymere Aufbaukomponenten ein.

Unter präpolymeren Aufbaukomponenten versteht man im allgemeinen hydroxyl-terminierte Präpolymere mit wenigstens zwei wiederkehrenden flexibilisierenden Strukturkomponenten. Beispiele dafür sind hydroxyl-terminierte Polyether auf Basis von Polypropylen- und Polybutylenglykol sowie hydroxylterminierte Polycaprolactone. Das Molekulargewicht (Zahlenmittel) dieser Präpolymere beträgt im allgemeinen 150-4000, bevorzugt 500-2500.

Präpolymere Aufbaukomponenten können di- oder höherfunktionell sein, vorzugsweise di- oder trifunktionell. Niedermolekulare Aufbaukomponenten sind in der Regel difunktionell. Polyester C) können aber geringe Mengen niedermolekularer, höherfunktioneller Aufbaukomponenten enthalten.

Bei allen diesen Ausführungsformen sind Art, Funktionalität und Menge höherfunktioneller Komponenten so zu wählen, dass ein löslicher Polyester mit den oben angegebenen Spezifikationen entsteht.

Beispiele für aliphatische Dicarbonsäuren sind gesättigte aliphatische Dicarbonsäuren, wie Oxalsäure, Malonsäure, Bernsteinsäure, $\alpha$-Methylbernsteinsäure, Glutarsäure, Adipinsäure, Pimelinsäure, Azelainsäure, Sebazinsäure oder dimerisierte Linolsäure; oder ungesättigte aliphatische Polycarbonsäuren, wie Maleinsäure, Fumarsäure, Mesaconsäure, Citraconsäure, Glutaconsäure oder Itaconsäure, sowie mögliche Anhydride dieser Säuren.

Beispiele für cycloaliphatische Dicarbonsäuren sind Hexahydrophthal-, -isophthal- oder -terephthalsäure, Tetrahydrophthal-, -isophthal- oder -terephthalsäure oder 4-Methyltetrahydrophthalsäure, 4-Methylhexahydrophthalsäure oder Endomethylentetrahydrophthalsäure.

Beispiele für aromatische Dicarbonsäuren sind Phthal-, Isophthal-und Terephthalsäure.

Beispiele für höherfunktionelle Carbonsäuren sind aromatische Tri- oder Tetracarbonsäuren, wie Trimellitsäure, Trimesinsäure, Pyromellitsäure oder Benzophenontetracarbonsäure; oder trimerisierte Fettsäuren oder Gemische von dimerisierten und trimerisierten Fettsäuren, wie sie beispielsweise unter der Bezeichnung Pripol® im Handel sind.

Beispiele für niedermolekulare aliphatische Diole sind $\alpha,\omega$-Alkylendiole, wie Ethylenglykol, Propan-1,2-diol, Propan-1,3-diol, Butan-1,4-diol, Pentan-1,5-diol, Neopentylglykol, Hexan-1,6-diol, Octan-1,8-diol, Decan-1,10-diol oder Dodecan-1,12-diol.

Beispiele für niedermolekulare cycloaliphatische Diole sind 1,3- oder 1,4-Dihydroxycyclohexan, 1,4-Cyclohexandimethanol, Bis-(4-hydroxycyclohexyl)-methan oder 2,2-Bis-(4-hydroxycyclohexyl)-propan.

Beispiele für niedermolekulare höherfunktionnelle Alkohole sind 1,1,1-Trimethylolethan, 1,1,1-Trimethylolpropan, Glycerin oder Pentaerithrit.

Beispiele für geeignete hydroxyl-terminierte Präpolymere mit mindestens zwei wiederkehrenden flexibilisierenden Struktureinheiten sind Polyether, Polyester oder Polythioether, sofern diese Verbindungen hydroxyl-terminiert sind.

Diese Verbindungen sind dem Fachmann an sich bekannt. Sie können linear oder verzweigt sein; bevorzugt werden die linearen Typen.

Beispiele für hydroxyl-terminierte Polyether sind Polyalkylenetherpolyole, die durch ionische Polymerisation, Copolymerisation oder Blockcopolymerisation von Alkylenoxiden, wie Ethylenoxid, Propylenoxid oder Butylenoxid, gegebenenfalls in Gegenwart von di- oder polyfunktionellen Alkoholen, wie Butan-1,4-diol, 1,1,1-Trimethylolethan, 1,1,1-Trimethylolpropan, Hexan-1,2,6-triol, Glycerin, Pentaerithrit oder Sorbit, oder von Aminen, wie Methylamin, Ethylendiamin oder Hexan-1,6-diamin, oder durch ionische Polymerisation oder Copolymerisation cyclischer Ether, wie Tetrahydrofuran, Ethylenoxid oder Propylenoxid mit sauren Katalysatoren, wie $BF_3 \bullet$ Etherat oder durch Polykondensation von unter Wasserabspaltung polykondensierbaren Glykolen, wie Hexan-1,6-diol, in Gegenwart saurer Veretherungskatalysatoren, wie p-Toluolsulfonsäure, erhalten werden. Ferner kann man auch Oxalkylierungsprodukte von Phosphorsäure oder phosphoriger Säure mit Ethylenoxid, Propylenoxid oder Butylenoxid verwenden.

Beispiele für hydroxyl-terminierte Polyesterpolyole sind Verbindungen, die sich von Di- und/oder Polycarbonsäuren und Di- und/oder Polyolen, bevorzugt von Dicarbonsäuren und Diolen ableiten. Beispiele für geeignete Polyole und Polycarbonsäuren sind weiter oben als Aufbaukomponenten für die Polyester C) aufgezählt.

Weitere Beispiele für geeignete hydroxyl-terminierte Präpolymere sind Polymerisationsprodukte von Lactonen, beispielsweise von $\epsilon$-Caprolactonen; oder Polyalkylenthioetherpolyole, beispielsweise die Polykondensationsprodukte des Thiodiglykols mit sich und mit Diolen und/oder Polyolen, wie beispielsweise Hexan-1,6-diol, Triethylenglykol, 2,2-Dimethyl-1,3-propandiol oder 1,1,1-Trimethylolpropan.

Die Herstellung der Polyester C) erfolgt in an sich bekannter Weise durch Umsetzung der Polyolkomponente(n) mit einem Ueberschuss an Polycarbonsäurekomponente(n). Anstelle der Polycarbonsäure kann man auch ein polyesterbildendes Derivat einsetzen, beispielsweise ein Anhydrid.

Bei einer anderen Herstellungsweise kondensiert man Polyol und Polycarbonsäure(derivat), wobei das Polyol im Ueberschuss eingesetzt wird. Das entstandene Präpolymere mit Hydroxylgruppen wird dann mit Carbonsäureanhydriden zum carboxyl-terminierten Polyester verkappt.

Man kann auch von den anderen, weiter oben beschriebenen hydroxylterminierten Präpolymeren ausgehen, und diese mit geeigneten Carbonsäureanhydriden verkappen.

Die Polyesterharze können durch allgemeine Arbeitsweisen, die bei der Herstellung solcher Harze Anwendung finden, hergestellt werden. So kann man zweckmässigerweise die Veresterung durch Schmelzkondensation der Carbonsäurekomponente(n) und des Diols durchführen. Die Reaktionsteilnehmer werden dabei beispielsweise unter Rühren auf Temperaturen bis zu 250 °C erhitzt. Dabei kann es sich anbieten, ein inertes Gas, wie beispielsweise Stickstoff, durch die Reaktionsmischung zu leiten, um das während der Veresterungsreaktion gebildete Wasser zu entfernen. Auch kann am Ende der Veresterungsreaktion gegebenenfalls ein leichtes Vakuum angelegt werden, um restliche niedermolekulare Spaltprodukte zu isolieren. Der bevorzugte Temperaturbereich der Schmelzkondensation beträgt 160-250 °C. Man kann aber auch andere Formen der Polykondensation anwenden, beispielsweise die Grenzflächenpolykondensation, die Polykondensation in Lösung, in Suspension oder in Masse.

Die Kondensation von Polycarbonsäuren und/oder Polyolen mit Funktionalitäten grösser als zwei erfolgt in dem Fachmann an sich bekannter Weise unter Bedingungen und mit stöchiometrischen Verhältnissen, so dass eine Gelierung verhindert und eine Verzweigung des Polyesters bewirkt wird.

Bei dem Polyester C) kann es sich um ein carboxyl-terminiertes Präpolymeres handeln oder dieses Addukt liegt im Gemisch mit nicht umgesetzter Carbonsäure oder Anhydrid vor.

Bevorzugte Komponenten A) sind Polyglycidylether auf der Basis von Phenolen und ganz besonders die Diglycidylether von Bisphenolen.

Diese Harze können flüssig oder fest sein. Für Klebstoffe verwendet man bevorzugt Kombinationen von flüssigen Diglycidylethern auf Bisphenol-Basis mit festen Diglycidylethern auf Bisphenol-Basis oder mit festen Polyglycidylethern auf Basis von Phenol-Formaldehyd-Novolaken oder Kresol-Formaldehyd Novolaken. Besonders bevorzugt werden die Kombinationen von flüssigen und festen Bisphenol-A-Diglycidylethern.

Bevorzugte Komponenten B) sind Verbindungen der Formel I, wie oben definiert, worin $R^1$ ein ein-oder zweifach alkyl- oder alkoxysubstituierter Benzol- oder Naphthalinrest ist, $R^2$ ein Cyclopentadienylanion ist und $X^\ominus$ $SbF_6^\ominus$ bedeutet.

Bevorzugte Substituenten des Benzol- oder Naphthalinrestes sind $C_1$-$C_6$-Alkyl- oder -Alkoxyreste, insbesondere Methyl, Ethyl, n-Propyl oder Isopropyl, Methoxy, Ethoxy, n-Propoxy oder Isopropoxy.

Bevorzugte Komponenten C) sind Verbindungen der Formel II

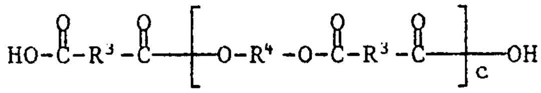 (II),

worin $R^3$ ein Rest einer aliphatischen, cycloaliphatischen oder aromatischen Dicarbonsäure nach dem Entfernen der Carboxylgruppen ist, bevorzugt ein Rest einer aliphatischen Dicarbonsäure, insbesondere ein Rest der Fumarsäure oder der Maleinsäure, $R^4$ ein Rest eines zweiwertigen aliphatischen oder cycloaliphatischen Alkohols nach dem Entfernen der Hydroxylgruppen ist und c eine ganze Zahl von 1 bis 50 bedeutet.

Der Index c ist vorzugsweise 2 bis 25.

Besonders bevorzugte Komponenten C) sind Verbindungen der Formel II, worin zumindest ein Teil der Reste $R^4$ zweiwertige Reste eines Polyalkylenethers sind.

Zu ganz besonders bevorzugten Resten $R^4$ zählen die Gruppen der Formeln IIIa, IIIb und insbesondere IIIc

$$-[CH_2-CH_2-O]_r-CH_2-CH_2- \quad (IIIa),$$

$$-[CH_2-C(CH_3)-O]_r-CH_2-C(CH_3)- \quad (IIIb)$$

$$-[CH_2-CH_2-CH_2-CH_2-O]_r-CH_2-CH_2-CH_2-CH_2- \quad (IIIc),$$

worin r eine ganze Zahl von 4 bis 25 ist.

Die härtbaren Zusammensetzungen können auch weitere, bekannte und üblicherweise in der Technik photopolymerisierbarer Materialien oder der Klebstoffe eingesetzte Zusatzstoffe D) enthalten. Beispiele für solche Zusatzstoffe sind Pigmente, Farbstoffe, Füllstoffe und Verstärkungsmittel, Glasfasern und sonstige Fasern, Flammhemmstoffe, Antistatika, Verlaufmittel, Antioxydantien, Haftvermittler, Weichmacher, Netzmittel, Thixotropiemittel und Lichtschutzmittel.

Die erfindungsgemässen Zusammensetzungen können auch Kombinationen von Initiatoren der Formel I und Sensibilisatoren enthalten. Insbesondere bei Verbindungen der Formel I, worin $R^1$ ein gegebenenfalls substituiertes Benzolderivat ist, beobachtet man bei Zugabe von Sensibilisatoren in der Regel eine Steigerung der Lichtempfindlichkeit. Beispiele für geeignete Sensibilisatoren findet man in der EP-A-152,377. Ferner können in den erfindungsgemässen Zusammensetzungen auch Kombinationen von Initiatoren der Formel I, Oxidationsmitteln und gegebenenfalls Sensibilisatoren für die Verbindungen I eingesetzt werden. Oxidationsmittel setzen in der Regel die Härtungstemperaturen herab und gestatten eine Verarbeitung unter milden Bedingungen. Geeignete Oxidationsmittel sind in der EP-A-126,712 erwähnt.

Die folgenden Mengenangaben beziehen sich jeweils auf die Gesamtmenge an Komponenten A), B), C) und D).

Die Menge an Komponente A) beträgt in der Regel 40 - 95 Gew.%, insbesondere 50 - 90 Gew.%. Der Initiator B) liegt in der Regel in Mengen von 0,1 - 10 Gew.%, insbesondere von 0,1 bis 5 Gew.%, vor.

Der Anteil von Komponente C) beträgt in der Regel 5 bis 50 Gew.%, besonders 5 bis 30 Gew.%, und ganz besonders bevorzugt 10 bis 30 Gew.%, während der Anteil der Zusatzstoffe D) 0 - 50 Gew.% ausmachen kann.

Die erfindungsgemässen härtbaren Zusammensetzungen sind lichtempfindlich. Sie lassen sich in beliebiger Form erhalten, z.B. als homogene flüssige oder feste Gemische. Feste Produkte können in an sich bekannter Weise zum Beispiel durch Verflüssigung fester Epoxidharze gegebenenfalls unter Zusatz geeigneter Lösungsmittel im Dunkeln oder unter rotem Licht, Erhitzen auf Temperaturen über ihrem Glasübergangspunkt, Zugabe des Initiators B) und der Komponente C), Homogenisierung und Abkühlung der entstandenen Gemische erhalten werden. Gewünschtenfalls kann man die so erhaltenen Produkte anschliessend zerkleinern. Im Falle von flüssigen Epoxidharzen kann die erfindungsgemässe Zusammensetzung durch einfaches Vermischen der Komponenten erhalten werden.

Die erfindungsgemässen härtbaren Zusammensetzungen sind bei Raumtemperatur in verhältnismässiger Dunkelheit, z.B. in rotem Licht, beträchtliche Zeit lagerfähig. Je nach ihrer Zusammensetzung und ihrem Endzweck, z.B. zur Herstellung von Ueberzügen oder Filmen, können sie direkt thermisch gehärtet werden oder in zwei Stufen durch eine Kombination von Bestrahlung und Erhitzen. Die Härtungstemperatur beträgt im allgemeinen 40 - 200 °C, bevorzugt 80 - 150 °C, besonders bevorzugt 80 - 110 °C.

Besonders bevorzugt wird die zweistufige Polymerisation (Härtung), indem man zunächst den Initiator der Formel I durch Bestrahlung des härtbaren Gemisches aktiviert und dann die so erhaltenen aktivierten Vorstufen thermisch härtet, wobei die Bestrahlungstemperatur unter der zum nachfolgenden Heisshärten angewandten liegt. Diese aktivierten Vorstufen lassen sich normalerweise bei Temperaturen härten, die erheblich niedriger liegen als bei Abwesenheit von Komponente C) erforderlich wäre, vorzugsweise bei Temperaturen zwischen 80 und 110 °C. Diese zweistufige Härtung ermöglicht es auch, die Polymerisation auf besonders einfache und vorteilhafte Weise zu steuern. Zudem sind die aus den erfindungsgemässen härtbaren Zusammensetzungen erhältlichen aktivierten Vorstufen in der Regel bei Raumtemperatur sogar im Licht beträchtliche Zeit lagerfähig, dies trifft besonders auf diejenigen Gemische zu, welche als Komponente A) ein hochviskoses oder festes Epoxidharz enthalten. Dieses Merkmal stellt einen weiteren wesentlichen Vorteil der zweistufigen Härtig und dieser aktivierten Vorstufen dar.

Die Bestrahlung der härtbaren Zusammensetzungen zur Herstellung der aktivierten Vorstufen erfolgt zweckmässig mit aktinischem Licht, vorzugsweise mit Strahlung einer Wellenlänge von 200 bis 600 nm. Als Lichtquellen eignen sich beispielsweise Xenonlampen, Argonlampen, Wolframlampen, Kohlelichtbögen, Metallhalogenid- und Metallichtbogenlampen, wie Niederdruck-, Mitteldruck- und Hochdruckquecksilberlampen oder auch Laser, wie Argon- oder Kryptonionen-Laser. Vorzugsweise wird die Bestrahlung mit Metallhalogenid- oder Hochdruckquecksilberlampen durchgeführt. Die Bestrahlungszeit hängt von verschiedenen Faktoren ab, einschliesslich z.B. dem polymerisierbaren organischen Material, der Art der Lichtquelle und deren Abstand vom bestrahlten Material. Die Bestrahlungszeit beträgt vorzugsweise 1 bis 60 Sekunden.

Das Erwärmen der belichteten Zusammensetzungen kann in herkömmlichen Konvektionsöfen stattfinden. Sind kurze Erwärmungs- oder Reaktionszeiten erforderlich, so kann dies durch Bestrahlung mit beispielsweise IR-Strahlung, IR-Lasern oder Mikrowellengeräten erfolgen.

Die erfindungsgemässen härtbaren Zusammensetzungen und die daraus erhältlichen aktivierten Vorstufen eignen sich beispielsweise zur Herstellung von Oberflächenbeschichtungen auf unterschiedlichen Substraten oder als Klebstoffe.

Geeignete Substrate sind beispielsweise Metalle, wie Eisen, Stahl, Cadmium, Zink und bevorzugt Aluminium und Kupfer, Halbleiter, wie Silizium, Germanium oder GaAs, Keramik, Glas, Kunststoffe wie Thermoplaste, Papier oder Holz und metallkaschierte Lamiate.

Die gehärteten Produkte zeichnen sich durch gute Oberflächenhaftung und hohe Biegefestigkeit aus. Bei Verklebungen lässt sich eine Kombination von hoher Zugscherfestigkeit mit hoher Rollenschälfestigkeit erzielen, so dass sich die Zusammensetzungen als Strukturkleber einsetzen lassen.

Die Erfindung betrifft daher auch die gehärteten Produkte aus den oben definierten Zusammensetzungen erhältlich durch direkte Heisshärtung oder durch Härtung mittels einer kombinierten Behandlung mit aktinischer Strahlung und Wärme.

Ferner betrifft die Erfindung die Verwendung der härtbaren Zusammensetzungen für die oben erwähnten Zwecke.

Die folgenden Beispiele erläutern die Erfindung.

A) Herstellung der carboxyl-terminierten Polyester

Allgemeine Arbeitsvorschrift:

Diol- und Dicarbonsäurekomponenten gemäss der folgenden Tabelle werden 6 Stunden bei 180 °C erhitzt und anschliessend unter Anlegen eines Vakuums von 200 mbar auskondensiert*. Die Mengen der eingesetzten Komponenten und die Eigenschaften der hergestellten Polyester findet man in der folgenden Tabelle:

* Polyester I: 2 h bei 180°C;
Polyester II - VIII: 0,5 h bei 210°C;
Polyester IX: 2 h bei 210°C;
Polyester X - XII: 1 h bei 210°C.

| Polyester Nr. | Bildungskomponenten[1] (g) | rel.Viskosität/°C mPas | Säurezahl mgKOH/g | $M_n$ | $M_w/M_n$ |
|---|---|---|---|---|---|
| I | Poly-THF-1000[2] (650)<br>Maleinsäureanhydrid (130) | 40 920/25 | 30,5 | 2780 | 2,8 |
| II | Poly-THF-1000[2] (500)<br>Neopentylglykol (52)<br>Maleinsäure-anhydrid (130) | 30 720/25 | 44,0 | 4456 | 8,9 |
| III | Polycaprolacton[3] (415)<br>Maleinsäureanhydrid (65,1) | 17 920/25 | 29,2 | 3820 | 2,4 |
| IV | Poly-THF-1000[2] (500)<br>Cyclohexandimethanol (72)<br>Maleinsäureanhydrid (130) | 250 800/25 | 34,7 | 4590 | 3,5 |
| V | Sebazinsäure (242)<br>1,6-Hexandiol (141,6)<br>Neopentylglykol (62,4)<br>Maleinsäureanhydrid (78,4) | 4080/40 | 76,3 | 2290 | 2,3 |
| VI | Adipinsäure (362)<br>1,6-Hexandiol (354)<br>Maleinsäureanhydrid (73,5) | 880/80 | 48,3 | 5110 | 1,6 |
| VII | Poly-THF - 1000[2] (500)<br>Neopentylglykol (52)<br>Fumarsäure (154) | 55040/25 | 69,9 | 4300 | 2,5 |
| VIII | Poly-THF-1000[2] (500)<br>Neopentylglykol (52)<br>Maleinsäureanhydrid (98)<br>Pripol® 1017[4] (200) | 65280/25 | 34,7 | 4170 | 2,5 |
| IX | Poly-THF-1000[2] (500)<br>Neopentylglykol (104)<br>Sebazinsäure (404) | 8320/25 | 60,5 | 2940 | 2,5 |

| Polyester Nr. | Bildungskomponenten[1] (g) | rel. Viskosität/°C mPas | Säurezahl mgKOH/g | $M_n$ | $M_w/M_n$ |
|---|---|---|---|---|---|
| X | Poly-THF-650[2] (650)<br>Bernsteinsäure (157) | 4500/40 | 32,2 | 5250 | 1,9 |
| XI | Poly-THF-650[2] (650)<br>Phthalsäureanhydrid (196,6) | 13400/40 | 13,6 | 4770 | 2,6 |
| XII | Neopentylglykol (104,1)<br>1,6-Hexandiol (118)<br>Sebazinsäure (505) | 3800/40 | 87,2 | 2160 | 2,3 |

1) Alle Polyester sind mit 0,3 g Di-tert. Butylkresol stabilisiert.

2) Die Zahlenangabe entspricht dem Zahlenmittel des Molekulargewichtes

3) Niax® PCP 210; OH-terminiertes Polycaprolacton vom Molekulargewicht 210

4) Gemisch von dimerisierter und trimerisierter Fettsäure

B) Herstellung und Test von Klebstofformulierungen

Es wird eine Stammformulierung eines Klebstoffes mit folgender Rezeptur hergestellt:
180,00 g flüssiges Bisphenol A Epoxidharz (Epoxidgehalt 5,25 - 5,40 Val/kg, Viskosität 10-12'000 mPa.s/25 °C)
120,00 g festes Bisphenol A Epoxidharz (Epoxidgehalt 2,15-2,22 Val/kg, Viskosität 160-190 mPa.s/25 °C; 40%ig Butylcarbitol [$C_4H_9O(C_2H_4O)_2H$]).
3,00 g $\gamma$ Glycidoxypropyltrimethoxysilan (Silan® A-187 von UC-Corp.)
3,00 g fluoriertes Alkylalkoxylat (Fluorad® FC 171 von 3M-Corp.)
3,75 g ($\eta^6$-Cumol) ($\eta^5$-cyclopentadienyl) Fe-II-hexafluoroantimonat
0,75 g 2-Isopropylthioxanthon.

Diese Komponenten werden in einer lichtundurchlässigen PE-Flasche mit einem Dissolver bei einer Geschwindigkeit von 10'000 RPM bis maximal 70 °C während höchstens 10' homogenisiert.

Diese Stammformulierung wird mit den jeweiligen Mengen des betreffenden Polyesters versetzt und nochmals im Dissolver während 3-5 Minuten homogenisiert.

Die Zusammensetzung der Formulierungen entnimmt man der untenstehenden Tabelle.

Untersuchung der Zugscherfestigkeit:

Zur Bestimmung der Zugscherfestigkeit von Aluminiumverklebungen werden obige Klebstoffe manuell mit einer 100 µm Spiralrakel auf die Enden zweier Anticorodal®-110 Prüfstreifen von 150x25x1,5 mm, welche vorgängig aufgerauht und entfettet wurden, appliziert. Die Klebstoffschicht wird durch Bestrahlung in einem Minicure-Gerät aktiviert, wobei einen Hochdruck-Quecksilberdampflampe von 80 W/cm in einem Abstand von 6-7 cm verwendet wird. Die Transportgeschwindigkeit beträgt 5m/min, was einer Belichtungszeit von 4,2 s entspricht. Nach der Bestrahlung werden die beiden Prüfstreifen in einer Alu-Halterung so zusammengefügt (Klebstoff gegen Klebstoff), dass eine Klebefläche von 25 x 12,5 mm entsteht. Die Härtung erfolgt zwischen zwei Heizplatten von jeweils 100 +/- 2 °C und einem Druck von 0,7 N/mm² während 10 Min. Nach dieser Zeit wird die Halterung den Heizplatten entnommen und während 15 Minuten bei Raumtemperatur abgekühlt. Anschliessend wird mit einer Zugprüfmaschine (Tensometer) die Zugscherfestigkeit (gemäss DIN 53283) bis zum Bruch des Prüflings gemessen. Die in der untenstehenden Tabelle angegebenen Zugscherwerte sind jeweils das Mittel aus 3 Verklebungen.

Untersuchung der Rollenschälfestigkeit (roller-peel):

Die Bestimmung der Rollenschälfestigkeit von Aluminiumverklebungen wird nach folgender Handhabung ausgeführt.

Je ein Prüfstreifen aus Avional®-150 mit den Dimensionen 25 x 250 x 0,5 mm und 25 x 250 x 2,0 mm werden in einem Chromsäureschwefelsäurebad folgender Zusammensetzung geätzt:

| | |
|---|---|
| Schwefelsäurekonz. (spez. Gew. 1,82) | 7,55 l |
| Chromsäure ($CrO_3$) | 2,5 kg |
| oder Natriumdichromat ($Na_2Cr_2O_7 + H_2O$) | 3,75 kg |
| Wasser | ca. 40 l |

Die Fügeteile werden in dieses auf ca. 60-65 °C angewärmte Aetzbad ca. 30 Minuten eingetaucht, anschliessend unter fliessendem, klarem kalten Wasser und dann unter warmem Wasser (50- max. 65 °C) gespült und an der Luft oder im Ofen bei nicht über 65 °C getrocknet.

Auf die so behandelten Prüfstreifen wird manuell mit einer 60 µm Spiralrakel auf je 1 Seite des Prüfstreifens ein Film appliziert. Die anschliessende Belichtung der Klebefilme erfolgt wie bei der Prüfung der Zugscherfestigkeit beschrieben.

Nach der Bestrahlung werden die beiden Prüfstreifen in einer Alu-Lehre so zusammengefügt, dass eine Klebefläche von 25 x 200 mm entsteht. Die Härtung erfolgt zwischen 2 Heizplatten von jeweils 100 +/- 2 °C und einem Druck von 0,3 N/mm² während 10 Minuten. Nach dieser Zeit wird die Halterung den Heizplatten entnommen und frühestens nach 24 h Lagerung der Proben bei RT der Rollenschälversuch nach DIN 53289 ausgeführt. Die in der folgenden Tabelle angegebenen Werte sind jeweils das Mittel aus 3 Verklebungen.

Tabelle

| Zusammensetzung und Untersuchung von Klebstoffformulierungen | | | |
|---|---|---|---|
| Beispiel Nr. | Polyester Nr. (Gew.%) | Zugscherfestigkeit ($N/mm^2$) | Rollenschälfestigkeit (N/mm) |
| 1 | I (10) | 14,0 | 0,6 |
| 2 | I (15) | 14,8 | 2,0 |
| 3 | I (20) | 15,9 | 4,5 |
| 4 | I (25) | 12,9 | 5,0 |
| 5 | I (30) | 9,6 | 5,6 |
| 6 | II (10) | 12,7 | - [1)] |
| 7 | II (20) | 14,9 | 3,5 |
| 8 | III (10) | 15,2 | - [1)] |
| 9 | III (20) | 17,6 | 3,8 |
| 10 | IV (10) | 17,1 | - [1)] |
| 11 | IV (20) | 14,1 | 3,7 |
| 12 | VI (10) | 12,6 | - [1)] |
| 13 | VI (20) | 13,9 | 3,9 |
| 14 | V (10) | 12,2 | - [1)] |
| 15 | V (20) | 13,6 | 2,9 |
| 16 | VII (10) | 10,4 | - [1)] |
| 17 | VII (20) | 15,8 | 2,3 |
| 18 | VIII (10) | 3,7 | - [1)] |
| 19 | VIII (20) | 4,1 | 0,9 |
| 20 | IX (10) | 16,4 | - [1)] |
| 21 | IX (20) | 13,6 | 4,2 |
| 22 | X (10) | 14,3 | - [1)] |
| 23 | X (20) | 11,4 | 2,4 |
| 24 | XI (10) | 5,2 | - [1)] |
| 25 | XI (20) | 19,2 | 4,8 |
| 26 | XII (10) | 8,9 | - [1)] |
| 27 | XII (20) | 10,4 | 2,5 |

[1)] nicht bestimmt.

Beispiele 28 - 30: Tests von Klebstofformulierungen

Es wird eine Stammformulierung eines Klebstoffes nach folgender Rezeptur hergestellt:
47,00 g flüssiges Bisphenol-A-Epoxidharz (Epoxidgehalt: 5,25 - 5,40 Val/kg; Viskosität 10-12'000 mPa•s/25°C),
15,00 g festes Bisphenol-A-Epoxidharz (Epoxidgehalt: 2,15 - 2,22 Val/kg; Viskosität 160 - 190 mPa•s/25°C; 40 %ig Butylcarbitol),
15,00 g cycloaliphatisches Epoxidharz (Epoxidgehalt: 7,00 - 7,63 Val/kg; Viskosität 350 - 450 mPa•s/25°C),
1,00 g γ-Glycidyloxytrimethoxysilan (Silan®A von UC-Corp.),

1,00 g fluoriertes Alkylalkoxylat (Fluorad®FC 171 von 3M-Corp.),
0,25 g Isopropylthioxanthon und
20,00 g Polyester I.

Als Photoinitiator verwendet man ($\eta^6$-Cumol) ($\eta^5$ cyclopentadienyl) Fe-II-trifluoromethansulfonat.

Die Herstellung der Klebstofformulierungen und die Messung der Zugscherfestigkeit erfolgt wie bei Beispielen 1-27 beschrieben. Die Härtung der belichteten Proben erfolgt hier allerdings bei 140 bzw. 150 °C. Die Ergebnisse findet man in der folgenden Tabelle

| Beispiel Nr. | Photoinitiator (Gew. %) | Härtung bei (°C) | Zugscherfestigkeit (N/mm$^2$) |
|---|---|---|---|
| 28 | [(Cumol)Fe (Cpd)] $CF_3SO_3$ (2,0) | 150<br>140 | 17,0<br>9,5 |
| 29 | [(Cumol)Fe (Cpd)] $CF_3SO_3$ (3,0) | 150<br>140 | 18,7<br>13,1 |
| 30 | [(Cumol)Fe (Cpd)] $CF_3SO_3$ (4,0) | 150<br>140 | 19,8<br>13,9 |

## Patentansprüche

**1.** Zusammensetzungen enthaltend

A) ein Epoxidharz mit durchschnittlich mindestens zwei 1,2-Epoxidgruppen pro Molekül oder ein Gemisch dieser Epoxidharze,

B) eine Verbindung der Formel I oder ein Gemisch dieser Verbindungen

$$\left[ R^1(Fe^{II}R^2)_a \right]^{\oplus ab} \quad ab \cdot [X]^{\ominus} \qquad (I) ,$$

worin a und b unabhängig voneinander 1 oder 2 sind, $R^1$ ein $\pi$-Aren ist, $R^2$ ein $\pi$-Aren, ein Indenylanion oder ein Cyclopentadienylanion bedeutet, $X^{\ominus}$ ein Anion $[LQ_m]^{\ominus}$ oder ein Anion einer teil- oder perfluorierten aliphatischen oder aromatischen Sulfonsäure ist, L B, P, As oder Sb bedeutet, Q Fluor ist oder ein Teil der Reste Q auch Hydroxylgruppen sein können und m der um Eins vergrösserten Wertigkeit von L entspricht, und

C) einen mit durchschnittlich mindestens zwei Carboxylgruppen terminierten flexiblen Polyester, der sich ableitet von einem aliphatischen oder cycloaliphatischen Polyol oder einem Gemisch solcher Polyole und einer aliphatischen, cycloaliphatischen oder aromatischen Polycarbonsäure oder einem Gemisch solcher Polycarbonsäuren.

**2.** Zusammensetzungen gemäss Anspruch 1, worin Komponente A) ein Polyglycidylether auf der Basis von Phenolen ist.

**3.** Zusammensetzungen gemäss Anspruch 1, worin Komponente A) eine Kombination von flüssigen Diglycidylethern auf Bisphenol-Basis mit festen Diglycidylethern auf Bisphenol-Basis oder mit festen Polyglycidylethern auf Basis von Phenol-Formaldehyd-Novolaken oder Kresol-Formaldehyd-Novolaken ist.

**4.** Zusammensetzungen gemäss Anspruch 3, worin Komponente A) eine Kombination von flüssigen und festen Bisphenol-A-Diglycidylethern ist.

**5.** Zusammensetzungen gemäss Anspruch 1 enthaltend als Komponente B) Verbindungen der Formel I, worin $R^1$ ein ein- oder zweifach alkyl-oder alkoxy-substituierter Benzol- oder Naphthalinrest ist, $R^2$ ein Cyclopentadienylanion ist und $X^{\ominus}$ $SbF_6^{\ominus}$ bedeutet.

**6.** Zusammensetzungen gemäss Anspruch 1, worin Komponente C) eine Verbindung der Formel II ist

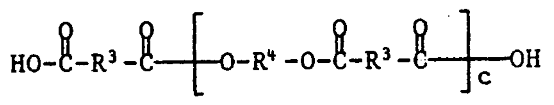 (II),

worin $R^3$ ein Rest einer aliphatischen, cycloaliphatischen oder aromatischen Dicarbonsäure nach dem Entfernen der Carboxylgruppen ist, $R^4$ ein Rest eines zweiwertigen aliphatischen oder cycloaliphatischen Alkohols nach dem Entfernen der Hydroxylgruppen ist und c eine ganze Zahl von 1 bis 50 bedeutet.

**7.** Zusammensetzungen gemäss Anspruch 6, worin zumindest ein Teil der Reste $R^4$ zweiwertige Reste eines Polyalkylenethers sind.

**8.** Gehärtete Produkte aus den Zusammensetzungen gemäss Anspruch 1 erhältlich durch direkte Heisshärtung oder durch Härtung mittels einer kombinierten Behandlung mit aktinischer Strahlung und Wärme.

**9.** Verwendung der Zusammensetzungen gemäss Anspruch 1 als Oberflächenbeschichtungen oder als Klebstoffe.

**Claims**

**1.** A composition containing

A) an epoxy resin having on average at least two 1,2-epoxy groups per molecule or a mixture of these epoxy resins,

B) a compound of the formula I or a mixture of these compounds

$$\left[ R^1(Fe^{II}R^2)_a \right]^{\ominus ab} \quad ab \cdot [X]^{\ominus} \qquad (I)$$

in which a and b independently of one another are 1 or 2, $R^1$ is a $\pi$-arene, $R^2$ is a $\pi$-arene, an indenyl anion or a cyclopentadienyl anion, $X^{\ominus}$ is an anion $[LQ_m]^{\ominus}$ or an anion of a partially fluorinated or perfluorinated aliphatic or aromatic sulfonic acid, L is B, P, As or Sb, Q is fluorine or some of the radicals Q can also be hydroxyl groups, and m corresponds to the valence of L increased by one, and

C) a flexible polyester which is terminated by, on average, at least two carboxyl groups and which is derived from an aliphatic or cycloaliphatic polyol or a mixture of such polyols and from an aliphatic, cycloaliphatic or aromatic polycarboxylic acid or a mixture of such polycarboxylic acids.

**2.** A composition according to claim 1, wherein component A) is a polyglycidyl ether based on phenols.

**3.** A composition according to claim 1, wherein component A) is a combination of liquid diglycidyl ethers based on bisphenol with solid diglycidyl ethers based on bisphenol or with solid polyglycidyl ethers based on phenol-formaldehyde novolaks or cresol-formaldehyde novolaks.

**4.** A composition according to claim 3, wherein component A) is a combination of liquid and solid bisphenol A diglycidyl ethers.

**5.** A composition according to claim 1, containing, as component B), a compound of the formula I in which $R^1$ is a benzene or naphthalene radical which is monosubstituted or disubstituted by alkyl or alkoxy, $R^2$ is a cyclopentadienyl anion and $X^{\ominus}$ is $SbF_6^{\ominus}$.

6. A composition according to claim 1, wherein component C) is a compound of the formula II

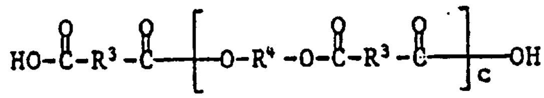

(II)

in which $R^3$ is a radical of an aliphatic, cycloaliphatic or aromatic dicarboxylic acid after the carboxyl groups have been removed, $R^4$ is a radical of a divalent, aliphatic or cycloaliphatic alcohol after the hydroxyl groups have been removed and c is an integer from 1 to 50.

7. A composition according to claim 6, wherein at least some of the radicals $R^4$ are divalent radicals of a polyalkylene ether.

8. A cured product formed from a composition according to claim 1, obtainable by means of direct curing by heat or by means of curing by means of combined treatment with actinic radiation and heat.

9. The use of a composition according to claim 1 as a surface coating or as an adhesive.

## Revendications

1. Compositions contenant
   A) une résine époxy ayant en moyenne au moins deux groupes 1,2-époxy par molécule ou un mélange de ces résines époxy,
   B) un composé de formule (I) ou un mélange de ces composés

$$\left[R^1\left(Fe^{II}R^2\right)_a\right]^{ab\oplus} ab\cdot[X]^- \qquad (I)$$

   dans laquelle a et b sont, indépendamment l'un de l'autre, 1 ou 2, $R^1$ est un arène $\pi$, $R^2$ est un arène $\pi$, un anion indényle ou un anion cyclopentadiényle, $X^-$ est un anion $[LQ_m]^-$ ou un anion d'un acide sulfonique aliphatique ou aromatique partiellement fluoré ou perfluoré, L représente B, P, As ou Sb, Q est le fluor ou les restes Q peuvent en partie aussi être des groupes hydroxy, et m correspond à la valence de L augmentée de 1, et
   C) un polyester flexible terminé par au moins deux groupes carboxy en moyenne, qui dérive d'un polyol aliphatique ou cycloaliphatique ou d'un mélange de tels polyols et d'un acide polycarboxylique aliphatique, cycloaliphatique ou aromatique ou d'un mélange de tels acides polycarboxyliques.

2. Compositions selon la revendication 1, dans lesquelles le constituant A) est un éther de polyglycidyle à base de phénols.

3. Compositions selon la revendication 1, dans lesquelles le constituant A) est une combinaison d'éthers diglycidyliques liquides à base de bisphénol avec des éthers diglycidyliques solides à base de bisphénols ou avec des éthers polyglycidyliques solides à base de novolaques phénol-formaldéhyde ou de novolaques crésol-formaldéhyde.

4. Compositions selon la revendication 3, dans lesquelles le constituant A) est une combinaison d'éthers diglycidyliques de bisphénol A liquides et solides.

5. Compositions selon la revendication 1, contenant comme constituant B) des composés de formule I dans laquelle $R^1$ est un reste de benzène ou de naphtalène mono- ou disubstitué par alkyle ou alcoxy, $R^2$ est un anion cyclopentadiényle et $X^-$ représente $SbF_6^-$.

**6.** Compositions selon la revendication 1, dans lesquelles le constituant C) est un composé de formule II

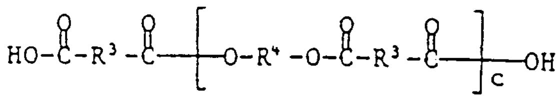 (II),

dans laquelle $R^3$ est un reste d'un acide dicarboxylique aliphatique, cycloaliphatique ou aromatique après l'élimination des groupes carboxy, $R^4$ est un reste d'un alcool dihydrique aliphatique ou cycloaliphatique après l'élimination des groupes hydroxy et c est un nombre entier de 1 à 50.

**7.** Compositions selon la revendication 6, dans lesquelles au moins une partie des restes $R^4$ est constituée par des restes divalents d'un polyalkylèneéther.

**8.** Produits durcis pouvant être obtenus à partir des compositions selon la revendication 1 par durcissement à chaud direct ou par durcissement au moyen d'un traitement combiné faisant intervenir une exposition à un rayonnement actinique et la chaleur.

**9.** Utilisation des compositions selon la revendication 1 comme revêtements de surface ou comme adhésifs.